# FASCICULE DE BREVET EUROPEEN

(11) **EP 2 681 053 B1**
(45) Date de publication et mention de la délivrance du brevet: **08.04.2015**
(21) Numéro de dépôt: 12709903.4
(22) Date de dépôt: 16.02.2012
(51) Int. Cl.: B41M 5/34, B41M 5/26, B42D 25/00, B42D 15/00, G06K 15/12

(54) **PROCEDE DE FORMATION D'UNE IMAGE LASER COULEUR A HAUT RENDEMENT REFLECTIF ET DOCUMENT SUR LEQUEL UNE IMAGE LASER COULEUR EST AINSI REALISEE**
VERFAHREN ZUR HERSTELLUNG EINES FARBIGEN LASERBILDES MIT HOHER REFLEKTIVITÄT UND DOKUMENT MIT AUF DIESE WEISE HERGESTELLTEM FARBIGEM LASERBILD
METHOD FOR FORMING A COLOUR LASER IMAGE WITH A HIGH LEVEL OF REFLECTIVITY AND DOCUMENT ON WHICH A COLOUR LASER IMAGE IS PRODUCED IN THIS WAY

(30) Priorité: 28.02.2011 FR 1100578
(43) Date de publication de la demande: 08.01.2014
(73) Titulaire: Lazzari, Jean-Pierre, 83120 Sainte Maxime (FR); Lazzari, Jean Marc, 78690 Saint Rémy l'Honoré (FR)
(72) Inventeur: Lazzari, Jean-Pierre, 83120 Sainte Maxime (FR); Lazzari, Jean Marc, 78690 Saint Rémy l'Honoré (FR)
(74) Mandataire: Delumeau, François Guy
(86) Numéro de dépôt international: PCT/FR2012/000059
(87) Numéro de publication internationale: WO 2012/117168

(56) Documents cités:
- EP-A1- 1 918 123
- FR-A1- 2 915 614
- US-A- 5 364 829
- US-A- 5 932 318
- US-A- 6 165 687
- US-A1- 2003 136 847

## Description

### Domaine d'application de l'invention:

La présente invention concerne l'amélioration du rendement réflectif d'images laser couleur. Elle trouve des applications notamment dans les images d'identité dédiées aux documents officiels : cartes d'identité, cartes de crédit, cartes vital, passeports, permis de conduire, badges d'entrée sécurisés, etc.

Les couleurs primaires rouge, vert et bleu (RGB en abréviation, initiales de « red, green et blue » eh terminologie anglaise), sont obtenues par mélange à part égale de couleurs primaires jaune, magenta et cyan (YMC en abréviation, initiales de « yellow, magenta et cyan en terminologie anglaise). L'industrie de l'imprimerie utilise les couleurs primaires YMC. Ces couleurs sont dites soustractives, car si une surface jaune est imprimée sur une feuille de papier blanc, le bleu est absorbé, et l'oeil dont les bâtonnets ne distinguent que le rouge, le vert, et le bleu, ne voit que du vert et du rouge. Pour une surface imprimée en magenta, le vert est absorbé, et l'oeil voit du rouge et du bleu. Enfin pour une surface imprimée en cyan, le rouge est absorbé, et l'oeil voit du vert et du bleu.

Les couleurs RGB comprennent donc de fait les couleurs YMC dont elles sont issues. Ces triplets de couleurs, RGB ou YMC, sont dites indépendantes car le mélange de deux couleurs d'un même triplet, ne peut former la troisième couleur de ce triplet. Il existe un grand nombre de couleurs indépendantes et donc un grand nombre de triplets de couleurs primaires.

Si l'on imprime des petites surfaces juxtaposées, nommées par la suite « sous pixels » et si ces surfaces sont suffisamment petites, l'oeil intègre les faisceaux lumineux issus de ces trois sous pixels, et voit une couleur qui est la composition des faisceaux lumineux produits par la réflexion de la lumière blanche sur ces trois sous pixels. Cette composition est dite additive, car il n'y a pas de mélange de couleur, mais simple mélange de faisceaux lumineux colorés, issus des trois sous pixels. La même composition se fait avec n'importe quelle couleur primaire de sous pixels, notamment les couleurs RGB ou les couleurs YMC, dont l'espace colorimétrique est inclus dans celui du triplet RGB. Ainsi, la composition additive de sous pixels imprimés avec des couleurs indépendantes est perçue par l'oeil comme une couleur neutre, plus ou moins proche du blanc.

Pour que la couleur blanche, apparaisse clairement, il est indispensable que les couleurs des sous pixels soient fortement éclairées. L'éclairement de ces couleurs pose parfois des difficultés importantes, c'est la raison pour laquelle des dispositifs renforcent le blanc par addition d'une couleur blanche supplémentaire.

### Etat de l'art antérieur:

Dès 1950, ce concept est apparu, comme décrit notamment dans le brevet GB 646642(A) dans lequel aux trois sources RGB d'un système d'illumination est proposé d'ajouter une quatrième source blanche W (initiale de « White » en terminologie anglaise)

Depuis certains écrans LCD rajoutent un sous pixel blanc pour renforcer à la fois la luminosité, et la composante blanche des images. Les brevets US 6453067 de 2002, KR20040083648, CN101763803, sont des exemples typiques choisis parmi environ 130 brevets existants en ce domaine.

La demande de brevet n° FR 10 01415 portant le titre « Dispositif de personnalisation d'images latentes encastrées » déposée le 7 avril 2010, décrit une structure comprenant une matrice de pixels constitués de sous pixels aux couleurs primaires RGB, encastrée sous une couche de protection transparente. A l'aide d'un laser, des niveaux de gris sont créés dans les sous pixels RGB recouverts d'une surface non réfléchissante noire, au travers de la couche transparente de protection. Ce traitement permet la personnalisation d'une image couleur de haute qualité. Cette personnalisation d'image laser couleurs trouve des applications notamment dans les cartes identitaires ou équivalents par exemple.

L'image ainsi personnalisée, est observée par réflexion au travers de la couche transparente de protection. L'image personnalisée doit être suffisamment réfléchissante, pour être observée en lumière ambiante, sans le recours à une source lumineuse additionnelle.

Afin d'éviter le recours à cette source lumineuse additionnelle, il a été proposé dans La demande de brevet cité précédemment de rajouter un sous pixel blanc, (W) en plus des trois sous pixels RGB, afin de renforcer à la fois la luminance de l'image, mais aussi sa composante blanche. Ainsi, il a été proposé que les quatre sous pixels RGBW forment par exemple un carré. Le sous pixel blanc couvre donc le quart de la surface du pixel constitué des trois sous pixels RGB et du pixel blanc.

Bien qu'intéressante à certains égards, cette structure de sous pixels, peut présenter quelques inconvénients. En effet, la technologie d'impression des sous pixels, ne permet pas d'éviter un recouvrement des couleurs RGBW ce qui peut générer une couleur grise préjudiciable à la qualité de l'image. Par ailleurs, les paramètres d'impression des couleurs, la qualité des encres utilisées, la réflectivité de ces encres, font qu'un rapport fixe de 25% de blanc (W) par rapport à la taille du pixel, n'est pas nécessairement le bon rapport pour générer une image de qualité.

S'agissant de documents imprimés, d'autres couleurs ont été proposées pour imprimer les sous pixels, comme les couleurs YMC, qui comme nous l'avons vu précédemment, sont à la base des couleurs RGB. Par exemple, le brevet US 7,763,179 propose des sous pixels aux couleurs YMC recouverts par une couche blanche. Un laser sublime la couche blanche afin de laisser apparaître les sous pixels colorés sous jacents.

Les mêmes problèmes de superposition des couleurs se retrouvent dans le procédé décrit par ce brevet. D'autre part, la réflectivité des couleurs au travers des ouvertures pratiquées dans la couche blanche supérieure est très faible.

En fait, les inconvénients cités, se manifestent quelle que soit la couleur des sous pixels : RGB, YMC, ou toute autre couleur.

Nous appellerons par la suite sous pixels RGB, les sous pixels dont les couleurs répondent à la définition de couleurs indépendantes, et correspondant aux couleurs détectées par les bâtonnets RGB de l'oeil humain.

US-A-5 932 318 divulgue un procédé de formation d'une image couleur à haut rendement réflectif.

### Exposé de l'invention :

La présente invention, a pour but de remédier aux inconvénients, de l'état de la technique, en améliorant le rendement réflectif et la luminosité des images. Pour ce faire, l'invention propose des géométries particulières des sous pixels imprimés par offset, ou jet d'encre, ou toute technique connue de l'homme de l'art, sur un matériau « lasérisable » transparent qui constitue également la couche de protection. On appellera par la suite matériau lasérisable, tout matériau qui noircit sous l'effet d'un faisceau laser.

De façon plus précise, l'invention a pour objet un procédé de formation d'une image laser couleur à haut rendement réflectif à partir d'un assemblage comprenant une couche de protection, des pixels constitués de sous pixels imprimés aux couleurs primaires et un support. L'impression des sous pixels est réalisée en séparant les sous pixels pour former une zone transparente non imprimée entre les sous pixels colorés renforçant la composante blanche de l'image personnalisée, la couche de protection étant transparente et en matériau lasérisable. L'ensemble de la couche de protection, des sous pixels avec la zone transparente et du support est laminé. La feuille de matériau lasérisable est ensuite partiellement carbonisée par l'effet d'un faisceau laser pour former des surfaces non réfléchissantes au-dessus des sous pixels et produire des niveaux de gris d'une image personnalisée.

Des matériaux lasérisables sont, a titre d'exemples non limitatifs, des polycarbonates, certains polychlorures de vinyle traités, des acrylonitrille-butadiène-styrènes traités, ou des poly-téréphtalates d'éthylène traités. Le matériau lasérisable est partiellement carbonisé par le laser pour former des niveaux de gris d'une image personnalisée.

Les surfaces des sous pixels imprimés n'étant pas adjacentes les unes aux autres, laissent apparaître des surfaces non imprimées qui, par transparence et par réflexion sur une couche réfléchissante sensiblement blanche, augmente la luminosité de l'image laser.

Le degré de noircissement est rendu proportionnel à l'énergie déposée par le laser, grâce à un logiciel de linéarisation, connu de l'homme de l'art.

La carbonisation laser qui fait apparaître les niveaux de gris, est effectuée à la fois au dessus des sous pixels mais également au dessus des surfaces transparentes, « au-dessus » signifiant plus près de l'espace de visualisation. Ainsi, le contraste qui est le rapport de luminosité entre une image blanche et une image noire, est conservé.

La feuille de matériau lasérisable transparente, peut être avantageusement d'une épaisseur comprise entre 10µm et 500µm. Les sous pixels sont imprimés sur la feuille de matériau lasérisable, par offset, jet d'encre, ou toute autre technique. Les sous pixels sont organisés en colonnes parallèles, ou en petites surfaces uniformément réparties.

Dans la seconde étape de fabrication, appelée « laminage » la feuille de matériau lasérisable, est soudée à chaud sous pression sur le support du document emprisonnant la matrice de sous pixels, entre la feuille de matériau lasérisable, et le support, formant un fond sensiblement blanc qui apparaît entre les sous pixels.

La personnalisation de l'image objet de l'invention, s'effectue alors à l'aide d'un faisceau laser qui carbonise dans son épaisseur la feuille de matériau lasérisable, selon des intensités ou des surfaces variables, au dessus de chaque sous pixel ou de chaque surface transparente non couverte par les couleurs des sous pixels, afin de faire apparaître les niveaux de gris de l'image définitive. Les surfaces transparentes entre chaque sous pixel, ont une surface déterminée par le concepteur de la matrice de sous pixels, afin d'augmenter la réflectivité et le renforcement des blancs de l'image personnalisée. La lumière ambiante, passant au travers de la feuille lasérisable transparente, et des surfaces transparentes non couvertes par les couleurs primaires se réfléchit sur un fond sensiblement blanc du support. La luminosité de l'image est ainsi améliorée en accentuant les nuances de dominantes blanches. De plus, ces surfaces transparentes non couvertes par les couleurs primaires permettent une certaine marge d'erreur de positionnement des sous pixels colorés, et évite la superposition des couleurs primaires.

Selon des modes de mise en oeuvre particuliers :
- les sous pixels sont imprimés sur la feuille de matériau lasérisable ;
- les sous pixels sont imprimés sur le support
- des moyens réfléchissants et planarisant recouvrent la surface du matériau lasérisable en regard des sous pixels, ces derniers étant imprimés sur ces moyens ;
- les sous pixels sont recouverts d'un moyen réfléchissant avant laminage ;
- un moyen réfléchissant est déposé sur le support.

Selon une variante de l'invention, les sous pixels en matrice ou en colonnes sont imprimés sur un support sensiblement blanc et recouverts par le matériau lasérisable.

L'invention concerne également un document comportant une image laser réalisée par la mise en oeuvre du procédé ci-dessus. Ce document comporte une feuille de matériau lasérisable servant de couche de protection, cette feuille étant au moins partiellement carbonisée par un rayonnement laser, des pixels imprimés entre la feuille lasérisable et un support de document, ces pixels formant une image et comportant des sous pixels organisés en surfaces séparées par une zone transparente. La feuille lasérisable, les sous pixels séparés par la zone transparente et le support sont aptes à être laminés ensemble.

Selon des modes de réalisation particuliers :
- l'impression des sous pixels est réalisée sur une couche de vernis formée entre la feuille lasérisable et le support ;
- une couche de vernis réfléchissant est apte à recouvrir les sous pixels;
- le support présente une surface sensiblement blanche, en regard des sous pixels;
- les sous pixels RGB sont organisés selon une configuration choisie parmi des colonnes parallèles séparées par des colonnes formant la zone transparente, des formes géométriques finies, réparties en ligne et en colonnes et séparées par un quadrillage formant la zone transparente, et des formes géométriques définies par groupe de sous pixels et ajustées en surface afin que l'intensité lumineuse réfléchie de chacun de ces groupes soit identique.

### Présentation des figures :

L'invention apparaîtra mieux après la description qui suit, donnée à titre explicatif et nullement limitatif. Cette description se réfère aux dessins annexés, sur lesquels :
   --La figure 1 montre en vue frontale dans l'espace de visualisation, un pixel comprenant trois sous pixels R,G,B ainsi qu'un quatrième sous pixel blanc W, selon l'art antérieur ;
   --La figure 2 montre en vue frontale, un pixel RGB plan constitués de trois sous pixels R, G, B formant chacun une colonne, ces colonnes étant séparées par des colonnes de surfaces transparentes ;
   --La figure 3 montre, en vue frontale, des pixels RGB constitués de sous pixels rectangulaires selon une matrice régulière, les sous pixels étant séparés par un quadrillage formé d'une surface transparente ;
   --La figure 4 montre, en vue frontale, des pixels RGB du type de la figure 3, avec des sous pixels de dimensions différentes ;
   --La figure 5 montre, en section, l'assemblage prêt au laminage d'une feuille de matériau lasérisable comprenant une impression de matrice R, G, B sur un support de carte ;
   --La figure 6 montre, en section, une variante de réalisation de l'assemblage de la figure 5, dans laquelle une sous couche de vernis réfléchissant est déposée sur la feuille lasérisable ayant une surface correspondant à celle la matrice R,G,B imprimée avant l'impression des couleurs de cette matrice et laminage ;
   --La figure 7 montre, en section, une autre variante de réalisation en référence à l'assemblage selon la figure 6, dans laquelle une couche de vernis réfléchissant recouvre la matrice d'impression des couleurs et avant laminage.

### Description détaillée :

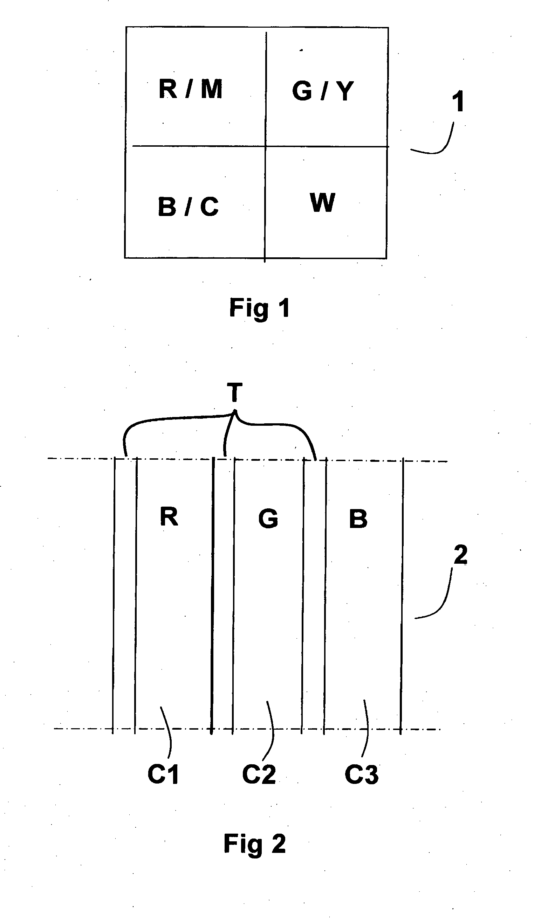

La figure 1 montre un pixel 1 selon l'art antérieur décrit dans le brevet FR 10 01415 précédemment cité. La surface des quatre sous pixels RGBW sont adjacentes, comme pour la structure décrite par le brevet US 7,769,179 avec des sous pixels YMC. Les sous pixels de la figure 1 sont partiellement recouverts de surfaces non réfléchissantes, par carbonisation laser, formant ainsi les niveaux de gris d'une image personnalisée. Le sous pixel W est imprimé par une couleur blanche, afin d'améliorer le rendu du blanc de l'image personnalisée. Il couvre une surface fixe correspondant à 25% de la surface du sous pixel.

La figure 2 montre un exemple de structure (2) selon l'invention, à savoir des sous pixels RGB constituée respectivement de colonnes C1,C2,C3 parallèles et alignées de même largeur et de même longueur dans l'exemple, imprimées respectivement aux couleurs RGB sur une feuille de matériau lasérisable transparent. Alternativement, la matrice peut être imprimée sur un support de carte avant d'être laminée avec la feuille lasérisable.

Les colonnes C1, C2, C3 sont séparées par des zones T non imprimées c'est-à-dire transparentes. Le faisceau laser qui réalise les niveaux de gris par carbonisation de la feuille lasérisable transparente, pour former une image personnalisée, balaye les colonnes C1, C2, C3 dans le sens de leur longueur. Ainsi les sous pixels ont une largeur égale à la largeur des colonnes C1, C2, C3, et une longueur variable, selon la longueur de la carbonisation laser reproduisant l'image à personnaliser.

Les zones transparentes T entre chaque colonne C1, C2, C3 ont une largeur prédéfinie par le concepteur de la matrice, afin d'optimiser le compromis entre la luminosité de l'image, qui est proportionnelle à la largeur des zones T, et la perte de couleur, produite par réduction de la largeur des colonnes imprimées C1, C2, C3. La largeur des zones T transparentes, entre deux colonnes C1, C2, C3 peut s'étendre entre quelques pourcents et 90 pourcent de la surface des colonnes C1, C2, C3.

La carbonisation laser au sein de la feuille lasérisable génère des surfaces non réfléchissantes, qui peuvent recouvrir partiellement les colonnes C1, C2, C3, selon les niveaux de gris recherchés. Cette carbonisation peut également recouvrir tout ou partie des zones transparentes T afin de produire des nuances de noir plus ou moins prononcées de l'image. Le contraste de l'image finale personnalisée est donc très élevé.

L'impression des couleurs R,G,B sur la feuille de matériau lasérisable, ou sur le support de carte, produit les colonnes C1, C2, C3 avec une certaine incertitude sur la précision du bord de ces colonnes. S'il n'y avait pas les zones transparentes T, alors il pourrait se produire des chevauchements de couleurs entre deux colonnes, qui seraient préjudiciables à la qualité de l'image personnalisée. Il en est de même de la précision des tirs laser, qui sans ces zones T pourraient noircir des sous pixels adjacents, modifiant la couleur résultante du pixel concerné. Les zones transparentes (T) selon l'invention, permettent donc d'éviter ces inconvénients.

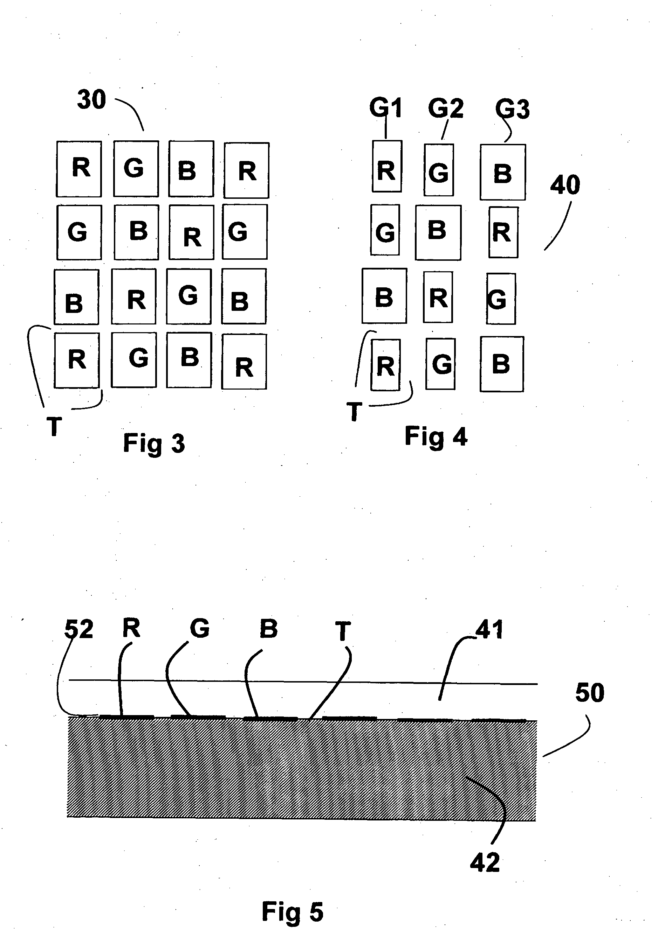

La figure 3 montre une matrice RGB (30) comportant des sous pixels ayant une géométrie prédéfinie, qui est rectangulaire, dans l'exemple de la figure 3. Mais toutes autres formes géométriques régulières et prédéfinies peuvent être utilisées, selon l'invention, comme les formes carrées, hexagonales, losanges, ou circulaires, par exemple. Contrairement à la structure colonnaire de la figure 2, chaque sous pixel a une surface définie. Chaque sous pixel est séparé de ses voisins par une zone non imprimée, c'est-à-dire transparente T formant un quadrillage. La largeur des zones transparentes T de ce quadrillage peut être différente « en colonne » selon le sens vertical de la figure 3, ou « en ligne » selon le sens horizontal de cette même figure. Cela dépend des précisions d'impression selon les sens indiqués précédemment. Les mêmes critères sur le rapport des surfaces des zones transparentes T et des zones colorées s'appliquent sur la structure des figures 2 et 3.

La figure 4 montre également un ensemble de sous pixels (40) formé d'une matrice de sous pixels RGB séparés par des zones transparentes T. Dans cet exemple de mise en oeuvre de l'invention, les dimensions de certains groupes de sous pixels n'est pas identique à celle d'autres groupes de sous pixels : la surface des sous pixels B rectangulaires du groupe (G3) est ainsi supérieure à celle des sous pixels rectangulaires R du groupe (G1) et G du groupe (G2). La couleur des sous pixels est vue par l'observateur par réflexion. Le pouvoir réfléchissant des sous pixels, est fonction d'un grand nombre de paramètres : la nature même de l'encre utilisée, la rugosité de surface sur laquelle l'encre est déposée, la rugosité de surface de l'encre elle-même, etc.

« Lorsque la matrice de sous pixels n'est pas encore personnalisée par la carbonisation laser, elle devrait apparaître uniformément claire. En réalité c'est très rarement le cas, à cause justement des paramètres énumérés précédemment. Elle apparaît souvent sous une teinte légèrement rosée, ou bleu pâle ».

Selon-l'invention, la surface de certains groupes de sous pixels est avantageusement ajustée afin que l'intensité lumineuse réfléchie par chaque groupe de sous pixels G1, G2, G3 soit identique. Un exemple d'ajustement est donné à la figure 4, ou les sous pixels B du groupe G3 ont une surface plus grande que celle des sous pixels rouges R du groupe G1 et des sous pixels G du groupe G2. Mais toute autre combinaison entre ces surfaces peut être mise en oeuvre sans sortir du cadre de l'invention.

La figure 5 montre en coupe l'assemblage (50) à feuille lasérisable (41) laminé sur un support de carte (42). La matrice de sous pixels RGB (52) ainsi que les zones transparentes T, sont formées entre la feuille de matériau lasérisable (41) et le support de carte (42).

Un faisceau laser par carbonisation génère des zones sombres ou noires dans l'épaisseur de la feuille transparente de matériau lasérisable (41). Ces zones obstruent partiellement la réflexion de la lumière ambiante qui les traverse, et qui se réfléchit soit sur les surfaces R,G,B soit sur la surface du support de carte (42).

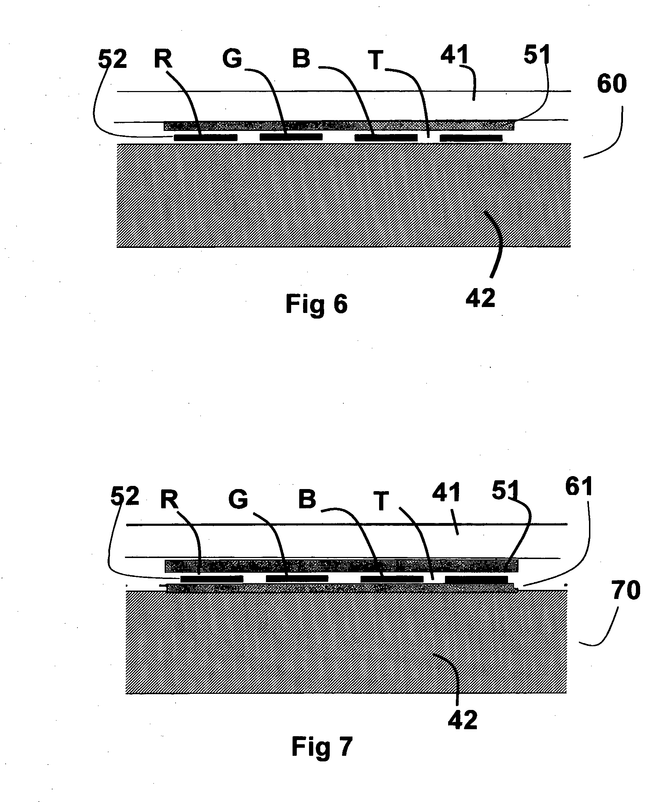

La figure 6 montre une variante (60) de l'invention. Avant l'impression des couleurs R,G,B sur la feuille de matériau lasérisable (41) une couche de vernis hautement réfléchissant et transparente (51) est déposée directement sur cette feuille (41), en une surface correspondant à celle de la matrice de sous pixels (RGB 52). Puis la matrice (52) de sous pixels RGB est imprimée sur la couche de vernis (51), rendant la surface des sous pixels exposés à l'observateur très brillante, avec un taux de réflectivité accru.

Le vernis (51) est transparent, ce qui permet à la lumière ambiante de le traverser, et de se réfléchir au travers des zones T transparentes. La couche de vernis (51) forme une couche planarisante. La surface de la feuille de matériau lasérisable (41) sur laquelle la matrice (52) de sous pixels RGB est imprimée, présente parfois une rugosité qui limite la qualité de la réflectivité des couleurs R,G,B. La surface du vernis planarisante est très lisse, ce qui favorise encore la réflectivité des couleurs R,G,B.

La figure 7 montre une autre variante selon l'invention en référence au mode de réalisation illustré à la figure 6. En plus, ou encore alternativement selon une autre variante de la couche de vernis (51) dé la figure 6, et après l'impression de la matrice (52) de sous pixels RGB sur la feuille de matériau lasérisable (41), une couche réfléchissante (61) est déposée sur la matrice (52) de sous pixels RGB avant que la feuille de matériau lasérisable ne soit assemblée par laminage, au support de carte (42).

Cette couche (61) favorise encore la réflectivité de la lumière ambiante, rendant l'image personnalisée encore plus claire et brillante. La couche (61) peut être constitué d'un vernis réfléchissant, d'une encre réfléchissante, ou toute autre surface réfléchissante connue de l'homme de l'art, comme une feuille mince d'aluminium par exemple. Selon une alternative de l'invention, la couche (61) peut être déposée sur le support de carte (42). Une partie de la lumière ambiante se réfléchit sur la surface des couleurs R,G,B mais une autre partie pénètre au travers de ces couleurs, et se réfléchit sur la couche (61) ce qui augmente la réflectivité de l'image.

## Revendications

1. Procédé de formation d'une image laser couleur à haut rendement réflectif à partir d'un assemblage comprenant une couche de protection (41), des pixels constitués de sous pixels (RGB,YMC) imprimés aux couleurs primaires (R,G,B ;Y,M,C), et un support (42), **caractérisé en ce que** l'impression des sous pixels (RGB, YMC) est réalisée en séparant les sous pixels pour former une zone transparente (T) non imprimée entre les sous pixels (RGB, YMC) et renforçant la composante blanche de l'image personnalisée, la couche de protection étant transparente et en matériau lasérisable (41) et **en ce que** l'ensemble de la couche de protection (41), des sous pixels (RGB, YMC)avec la zone transparente (T) et du support (42) est laminé, et dans lequel la feuille de matériau lasérisable (41) est partiellement carbonisée par l'effet d'un faisceau laser pour former des surfaces non réfléchissantes au-dessus des sous pixels (RGB, YMC)et produisant des niveaux de gris d'une image personnalisée.

2. Procédé de formation d'une image laser couleur selon la revendication 1 dans lequel les sous pixels (RGB, YMC) sont imprimés sur la feuille de matériau lasérisable (41).

3. Procédé de formation d'une image laser couleur selon la revendication 1 dans lequel les sous pixels (RGB, YMC) sont imprimés sur le support (42).

4. Procédé de formation d'une image laser couleur selon l'une des revendications 1 ou 3, dans lequel des moyens réfléchissants et planarisant (51) recouvrent la surface du matériau lasérisable (41) en une surface correspondante à celle de la matrice (52) de sous pixels (RGB, YMC)ces derniers étant imprimés sur ces moyens (51).

5. Procédé de formation d'une image laser couleur selon l'une quelconque des revendications 1 à 4, dans lequel la matrice (52) de les sous pixels (RGB, YMC) est recouverte d'un moyen réfléchissant (61) avant laminage.

6. Procédé de formation d'une image laser couleur selon la revendication 5, dans lequel un moyen réfléchissant (61) est déposé sur le support (42)

7. Document comportant une image laser couleur réalisée par la mise en oeuvre du procédé selon l'une quelconque des revendications précédentes, **caractérisé en ce que** ce document comporte une feuille de matériau lasérisable (41) servant de couche de protection, cette feuille étant au moins partiellement carbonisée par un rayonnement laser, des pixels imprimés entre la feuille lasérisable (41) et un support de document (42) ces pixels formant une image et comportant des sous pixels (RGB, YMC)organisés en surfaces séparées par une zone transparente (T), et **en ce que** la feuille lasérisable (41) les sous pixels (RGB, YMC)séparés par la zone transparente (T) et le support (42) sont aptes à être laminés ensemble.

8. Document selon la revendication précédente, dans lequel l'impression des sous pixels (RGB, YMC) est réalisée sur une couche de vernis (51) formée sur la feuille lasérisable (41).

9. Document selon la revendication précédente, dans lequel une couche de vernis réfléchissant (61) est apte à recouvrir les sous pixels (RGB, YMC).

10. Document selon l'une quelconque des revendications 6 à 8, dans lequel le support (42) présente une surface sensiblement blanche, en regard des sous pixels (RGB, YMC)

11. Document selon l'une quelconque des revendications 7 à 10, dans lequel les sous pixels RGB sont organisés selon une configuration choisie parmi des colonnes parallèles (C1, C2, C3), séparées par des colonnes formant la zone transparente (T), des formes géométriques finies, réparties en ligne et en colonnes et séparées par un quadrillage formant la zone transparente (T) et des formes géométriques définies par groupe de sous pixels (G1), (G2), (G3) et ajustées en surface afin que l'intensité lumineuse réfléchie de chacun de ces groupes soit identique.

## Patentansprüche

1. Verfahren zur Herstellung eines farbigen Laserbildes mit hoher Reflektivität aus einer Anordnung, umfassend eine Schutzschicht (41), Pixel, die aus Unterpixeln (RGB, YMC) gebildet werden, die mit Primärfarben (R,G,B; Y,M,C) gedruckt werden, und einen Träger (42), **dadurch gekennzeichnet, dass** das Drucken der Unterpixel (RGB, YMC) durchgeführt wird, indem die Unterpixel geteilt werden, um einen nicht bedruckten transparenten Bereich (T) zwischen den Unterpixeln (RGB, YMC) zu bilden und indem die Weißkomponente des personalisierten Bildes verstärkt wird, wobei die Schutzschicht transparent und aus mit Laser behandelbarem Material (41) ist, und dass die Anordnung der Schutzschicht (41), der Unterpixel (RGB, YMC) mit dem transparenten Bereich (T) und des Trägers (42) laminiert wird, und wobei das Blatt aus mit Laser behandelbarem Material (41) teilweise durch die Wirkung eines Laserstrahls karbonisiert wird, um nichtreflektierende Flächen über den Unterpixeln (RGB, YMC) zu erstellen und dadurch Graustufen eines personalisierten Bildes bildet.

2. Verfahren zur Herstellung eines farbigen Laserbildes nach Anspruch 1, wobei die Unterpixel (RGB, YMC) auf das Blatt aus mit Laser behandelbarem Material (41) gedruckt werden.

3. Verfahren zur Herstellung eines farbigen Laserbildes nach Anspruch 1, wobei die Unterpixel (RGB, YMC) auf den Träger (42) gedruckt werden.

4. Verfahren zur Herstellung eines farbigen Laserbildes nach einem der Ansprüche 1 oder 3, wobei reflektierende und einebnende Mittel (51) die Fläche des mit Laser behandelbarem Materials (41) in einer Fläche bedecken, die jener der Matrix (52) der Unterpixel (RGB, YMC) entspricht, wobei letztere auf diese Mitteln (51) gedruckt werden.

5. Verfahren zur Herstellung eines farbigen Laserbildes nach einem der Ansprüche 1 bis 4, wobei die Matrix (52) der Unterpixel (RGB, YMC) vor dem Laminieren mit einem reflektierenden Mittel (61) bedeckt wird.

6. Verfahren zur Herstellung eines farbigen Laserbildes nach Anspruch 5, wobei ein reflektierendes Mittel (61) auf den Träger (42) aufgetragen wird.

7. Dokument mit einem farbigen Laserbild, das durch die Umsetzung des Verfahrens nach einem der vorhergehenden Ansprüche hergestellt ist, **dadurch gekennzeichnet, dass** dieses Dokument ein Blatt aus mit Laser behandelbarem Material (41), das als Schutzschicht dient, wobei dieses Blatt mindestens teilweise durch die Wirkung eines Laserstrahls karbonisiert ist, Pixel, die zwischen das Blatt aus mit Laser behandelbarem Material (41) und einen Dokumentträger (42) gedruckt sind, wobei diese Pixel ein Bild bilden und Unterpixel (RGB, YMC) aufweisen, die in Flächen organisiert sind, die durch einen transparenten Bereich (T) getrennt sind, aufweist, und, dass das mit Laser behandelbare Blatt (41), die Unterpixel (RGB, YMC), die durch den transparenten Bereich (T) getrennt sind, und der Träger (42) geeignet sind, zusammen laminiert zu werden.

8. Dokument nach dem vorhergehenden Anspruch, wobei das Drucken der Unterpixel (RGB, YMC) auf einer Lackschicht (51) durchgeführt wird, die auf dem mit Laser behandelbarem Blatt (41) gebildet ist.

9. Dokument nach dem vorhergehenden Anspruch, wobei eine reflektierende Lackschicht (61) geeignet ist, die Unterpixel (RGB, YMC) zu bedecken.

10. Dokument nach einem der Ansprüche 6 bis 8, wobei der Träger (42) eine im Wesentlichen weiße Fläche gegenüber den Unterpixeln (RGB, YMC) aufweist.

11. Dokument nach einem der Ansprüche 7 bis 10, wobei die Unterpixel RGB nach einer Konfiguration organisiert sind, die aus parallelen Spalten (C1, C2, C3), die durch Spalten getrennt sind, die den transparenten Bereich (T) bilden, aus fertigen geometrischen Formen, die in Reihen und Spalten angeordnet und durch ein Raster getrennt sind, die den transparenten Bereich (T) bilden, und aus geometrischen Formen ausgewählt ist, die durch Gruppen von Unterpixeln (G1), (G2), (G3) definiert sind und auf der Oberfläche derart angepasst sind, dass die reflektierte Lichtintensität von jeder dieser Gruppen die gleiche ist.

## Claims

1. A method for forming a colour laser image with high reflective yield from an assembly comprising a protective layer (41), pixels formed of sub-pixels (RGB,YMC) printed in the primary colours (R,G,B; Y,M,C), and a substrate(42), **characterized in that** the printing of the sub-pixels (RGB, YMC) is performed by separating the sub-pixels to form a transparent, non-printed region (T) between the sub-pixels (RGB, YMC) and reinforcing the white component of the personalised image, the protective layer being transparent and in laserable material (41), and **in that** the assembly of the protective layer (41), of the sub-pixels (RGB, YMC) with the transparent region (T) and of the substrate (42) is laminated, and wherein the sheet of laserable material (41) is partly carbonized under the effect of a laser beam to form non-reflective surfaces above the sub-pixels (RGB, YMC) and producing grey levels of a personalised image.

2. The method for forming a colour laser image according to claim 1 wherein the sub-pixels (RGB, YMC) are printed on the sheet of laserable material (41).

3. The method for forming a colour laser image according to claim 1 wherein the sub-pixels (RGB, YMC) are printed on the substrate (42).

4. The method for forming a colour laser image according to one of claims 1 or 3, wherein reflective and planarizing means (51) overlay the surface of the laserable material (41) as a surface corresponding to that of the matrix (52) of sub-pixels (RGB, YMC), the latter being printed on these means (51).

5. The method for forming a colour laser image according to any of claims 1 to 4, wherein the matrix (52) of the sub-pixels (RGB, YMC) is overlaid with reflective means (61) before lamination.

6. The method for forming a colour laser image according to claim 5 wherein reflective means (61) are deposited on the substrate (42).

7. A document comprising a colour laser image produced by implementing the method according to any of the preceding claims, **characterized in that** this document comprises a sheet of laserable material (41) acting as protective layer, this sheet being at least partly carbonized by laser radiation, pixels printed between the laserable sheet (41)and a document substrate (42), these pixels forming an image and comprising sub-pixels (RGB, YMC) organised into surfaces separated by a transparent region (T), and **in that** the laserable sheet (41), the sub-pixels (RGB, YMC)separated by the transparent region (T) and the substrate (42) are able to be laminated together.

8. The document according to the preceding claim, wherein the printing of the sub-pixels (RGB, YMC) is performed on a varnish layer (51) formed on the laserable sheet (41).

9. The document according to the preceding claim, wherein a reflective varnish layer (61) is capable of overlaying the sub-pixels (RGB, YMC).

10. The document according to any of claims 6 to 8 wherein the substrate (42) has a substantially white surface facing the sub-pixels (RGB, YMC)

11. The document according to any of claims 7 to 10 wherein the sub-pixels RGB are organised in a configuration chosen from among parallel columns (C1, C2, C3)separated by columns forming the transparent region (T), finite geometrical shapes distributed in rows and columns and separated by a grid pattern forming the transparent region (T), and geometrical shapes defined per group of sub-pixels (G1), (G2), (G3) and surface-adjusted so that the reflected light intensity of each of these groups is identical.
